# EUROPÄISCHE PATENTANMELDUNG

(11) **EP 4 718 020 A1**
(43) Veröffentlichungstag der Anmeldung: **01.04.2026**
(21) Anmeldenummer: 25203209.9
(22) Anmeldetag: 18.09.2025
(51) Int. Cl.: G01B 3/06

(54) **GLIEDERMASSSTAB**

(30) Priorität: 27.09.2024 DE 102024128146
(71) Anmelder: Maßstab Diamant GmbH, 32584 Löhne (DE)
(72) Erfinder: Huck, Heinz, 32549 Bad Oeynhausen (DE)
(74) Vertreter: Wickord, Wiro

(57) **Zusammenfassung**

Die Erfindung betrifft einen Gliedermaßstab mit einer Mehrzahl an in einer Gliederlängsrichtung (L) langgestreckten flachen Gliedern (1, 2), die paarweise über eine Gelenkverbindung (10) um eine Drehachse (D) drehgelenkig verbunden sind, wobei
- die Gelenkverbindung (10) eine an einem ersten Glied (1) festgelegte erste Gelenkscheibe (11) und eine an einem zweiten Glied (2) festgelegte zweite Gelenkscheibe (12) aufweist,
- die Gelenkscheiben (11, 12) zueinander komplementäre Rastmittel aufweisen, die in einer eingefalteten Stellung und in einer ausgefalteten Stellung der Glieder (1, 2) einerseits und in einer beim Verschwenken des ersten Glieds (1) relativ zu dem zweiten Glied (2) dazwischenliegenden abgewinkelten Zwischenstellung andererseits ineinander rasten,
- die Gelenkscheiben (11, 12) einen Außendurchmesser (A) aufweisen, der geringer ist als eine Gliederbreite (B) der Glieder (1, 2),
- die erste Gelenkscheibe (11) insgesamt vier innenliegend und diametral in Bezug auf die Drehachse (D) angeordnete Rastdurchgangsbohrungen (13.1, 13.2, 13.3, 13.4) als Rastmittel aufweist,
- die zweite Gelenkscheibe (12) insgesamt zwei diametral in Bezug auf die Drehachse (D) angeordnete Rasterhebungen (14.1, 14.2) als Rastmittel aufweist und
- die Rasterhebungen (14.1, 14.2) jeweils auf einer elastisch biegsamen Federzunge (15.1, 15.2) der zweiten Gelenkscheibe (12) innenliegend angeordnet sind.

## Beschreibung

Die Erfindung betrifft einen Gliedermaßstab mit einer Mehrzahl an in einer Gliederlängsrichtung langgestreckten flachen Gliedern, die paarweise über eine Gelenkverbindung um eine Drehachse drehgelenkig verbunden sind, wobei zueinander komplementäre Rastmittel der Gelenkverbindung in einer eingefalteten Stellung und in einer ausgefalteten Stellung der Glieder einerseits und in einer beim Verschwenken des ersten Glieds relativ zu dem zweiten Glied dazwischenliegenden abgewinkelten Zwischenstellung andererseits ineinander rasten.

Derartige Gliedermaßstäbe, bei denen die Glieder in einer stabilen Zwischenstellung rasten, werden beispielsweise bei dem Vermessen von kleinen oder schwer zugänglichen Messobjekten sowie bei dem Messen von Winkeln verwendet. Besonders bevorzugt ist dabei eine Zwischenstellung, in welcher zwischen dem ersten Glied und dem zweiten Glied ein rechter Winkel gebildet ist.

Gliedermaßstäbe der vorgenannten Art sind aus dem Stand der Technik bekannt, wobei sich die bekannten Lösungen durch die konkrete Ausbildung der die Gelenkverbindung bildenden Beschlagelemente und der zueinander komplementären Rastmittel unterscheiden.

Die DE 10 2009 007 556 A1 offenbart einen Gliedermaßstab der eingangs genannten Art, bei welchem die Gelenkverbindung durch zwei rechteckige, jeweils mit den Gliedern verbundene Gelenkplatten gebildet wird. Die Gelenkplatten stellen hierbei die komplementär zueinander geformten Rastmittel zum Ausbilden eines Rastmechanismus bereit. Eine erste Gelenkplatte weist hierbei zwei Federzungen mit pyramidenstumpfförmigen Rasterhebungen auf. Eine zweite Gelenkplatte weist zwei zu den Rasterhebungen komplementär geformte wannenförmige Rastvertiefungen einerseits und zwei rechteckförmige Randaussparungen andererseits als Rastmittel auf. Die Glieder weisen hier zudem zur Aufnahme der Gelenkplatten wannenförmige Ausnehmungen mit einem Stegabschnitt im Bereich einer Durchgangsbohrung für einen Nietbolzen auf.

In der DE 20 2019 105 481 U1 ist ein Gliedermaßstab mit rechteckigen Gelenkplatten offenbart, wobei eine erste Gelenkplatte insgesamt vier diametral angeordnete Federzungen mit je einer einzigen Rasterhebung und eine zweite Gelenkplatte insgesamt zwei diametral angeordnete Rastaussparungen aufweist. Die Rasterhebungen und die Rastaussparungen stellen hier zueinander komplementäre, miteinander rastende Rastmittel bereit, die bevorzugt eine pyramidenstumpfförmige Gestalt aufweisen.

Aus der DE 20 2019 106 896 U1 ist ein Gliedermaßstab bekannt mit rechteckigen Gelenkplatten, wobei die erste Gelenkplatte insgesamt zwei Federzungen mit jeweils einer Rasterhebung und die zweite Gelenkplatte insgesamt vier hierzu komplementäre Rastaussparungen aufweist. Die Rastaussparungen sind hier entweder allesamt als Ausnehmungen in der zweiten Gelenkplatte gebildet oder die zweite Gelenkplatte weist zwei erste Rastaussparungen in Gestalt von Vertiefungen und zwei zweite Rastaussparungen in Gestalt von randseitigen Vertiefungen auf. Die Rastaussparungen und die Rasterhebungen weisen hier bevorzugt eine zumindest abschnittsweise halbkugelförmige Gestalt auf. Eine alternative Ausführungsform des hier offenbarten Gliedermaßstabs sieht vor, dass die Gelenkplatten jeweils jedenfalls eine Rasterhebung als auch einen Rastvorsprung aufweisen.

Den vorgenannten, aus dem Stand der Technik bekannten Lösungen ist jeweils gemein, dass die rechteckigen Gelenkplatten eine Länge aufweisen, die größer ist als eine Breite der Glieder, und damit die Gelenkplatten beim Verschwenken der Glieder sichtbar sind. Auch sind die Fertigung und Befestigung dieser rechteckigen Gelenkplatten an den Gliedern des Gliedermaßstabs vergleichsweise aufwendig.

Die WO 2006/086933 A1 offenbart eine Gelenkverbindung für einen Gliedermaßstab mit im Wesentlichen kreisförmigen Gelenkscheiben, deren Außendurchmesser geringer ist als eine Breite der Glieder des Gliedermaßstabs. In den Gelenkscheiben sind zueinander komplementäre Rastmittel vorgesehen, die in Form von randseitigen, das heißt jedenfalls teilweise in einen äußeren Rand der Gelenkscheiben mündenden Rastvertiefungen und Rasterhebungen ausgeführt sind. Die Rastmittel sind hier als vom Rand der Gelenkscheiben ausgehende Ausschnitte beziehungsweise Ausstanzungen hergestellt. In einer Ausführungsform, welche für ein Ineinanderrasten der Rastmittel bei einer Schwenkstellung der Glieder des Gliedermaßstabs bei jeweils 0°, 90°, 180°, 270° ausgeführt ist, sind hier insgesamt vier Rastvertiefungen und insgesamt vier Rastmittel vorgesehen.

Aufgabe der vorliegenden Erfindung ist es, einen Gliedermaßstab der eingangs genannten Art so weiterzubilden, dass ein Rasten der Glieder bei einem einfachen konstruktiven Aufbau sichergestellt ist. Vorzugsweise sollen dabei die Elemente der Gelenkverbindung beim Verschwenken der Glieder weitestgehend unsichtbar und zudem kostengünstig zu fertigen sein.

Zur Lösung der Aufgabe weist die Erfindung die nachfolgenden Merkmale des unabhängigen Patentanspruchs 1 auf:
- Die Gelenkverbindung weist eine an einem ersten Glied festgelegte erste Gelenkscheibe und eine an einem zweiten Glied festgelegte zweite Gelenkscheibe auf,
- die Gelenkscheiben weisen zueinander komplementäre Rastmittel auf, wobei die Rastmittel in einer eingefalteten Stellung und in einer ausgefalteten Stellung der Glieder einerseits und in einer beim Verschwenken des ersten Glieds relativ zu dem zweiten Glied dazwischenliegenden abgewinkelten Zwischenstellung andererseits ineinander rasten,

- die Gelenkscheiben weisen einen Außendurchmesser auf, der geringer ist als eine Gliederbreite der Glieder,
- die erste Gelenkscheibe weist insgesamt vier innenliegend und diametral in Bezug auf die Drehachse angeordnete Rastdurchgangsbohrungen als Rastmittel auf,
- die zweite Gelenkscheibe weist insgesamt zwei diametral in Bezug auf die Drehachse angeordnete Rasterhebungen als Rastmittel auf und
- die Rasterhebungen sind jeweils auf einer elastisch biegsamen Federzunge der zweiten Gelenkscheibe innenliegend angeordnet.

Der besondere Vorteil der Erfindung besteht darin, dass die Beschlagelemente der Gelenkverbindung als besonders kompakte, im Wesentlichen kreisförmige Gelenkscheiben ausgeführt sind, die beim Verschwenken der Glieder vollständig von den Gliedern überdeckt und damit nahezu unsichtbar sind. Die kreisförmige Grundform der Gelenkscheiben ermöglicht eine kostengünstige Fertigung derselben, beispielsweise als Stanzbauteil, wobei auf einer Gelenkscheibe jeweils gleich ausgeführte Rastmittel vorgesehen werden können.

Die zueinander komplementären Rastmittel der Gelenkscheiben ermöglichen ein stabiles Rasten der Gelenkscheiben jeweils
- in der eingefalteten Stellung, in der das erste Glied und das zweite Glied zueinander parallel und vollständig übereinanderliegend gehalten sind und einen Ausfaltwinkel von φ = 0° aufspannen,
- in der ausgefalteten Stellung, in der das erste Glied und das zweite Glied zueinander parallel fluchtend und lediglich teilweise übereinanderliegend gehalten sind und einen Ausfaltwinkel von φ = 180° aufspannen und
- in der zwischen der eingefalteten Stellung und der ausgefalteten Stellung liegenden stabilen, definierten Zwischenstellung, besonders bevorzugt bei Aufspannung eines Ausfaltwinkels von φ = 90° beziehungsweise φ = 270° zwischen dem ersten Glied und dem zweiten Glied.

Jeweils tauchen beziehungsweise greifen beim Rasten in den vorgenannten Stellungen die zwei Rasterhebungen der zweiten Gelenkscheibe in zwei der insgesamt vier Rastaussparungen der ersten Gelenkscheibe gegen eine von den Federzungen aufgebrachte Federkraft ein. Es ist insofern ein gleichmäßiges Einrasten in jeder der vorgenannten Stellungen der Glieder zueinander gegeben. Die von den Federzungen aufgebrachte Federkraft sorgt dafür, dass die Rasterhebungen bei einem Verschwenken der Glieder in eine Position außerhalb der bevorzugten Stellungen aus den Rastdurchgangsbohrungen herausgezogen werden.

Erfindungsgemäß sind die zueinander komplementären Rastmittel, mithin die Rasterhebungen und die Rastdurchgangsbohrungen, jeweils innenliegend in den Gelenkscheiben angeordnet, das heißt sie werden jeweils vollständig von Material der Gelenkscheiben umschlossen beziehungsweise sie sind beabstandet zu einem Rand der Gelenkscheiben angeordnet. Diese innenliegende Anordnung der Rastmittel ermöglicht eine kompakte und geschützte Bauweise, da die Rastmittel in der Ebene der Gelenkscheiben angeordnet sind. Dadurch sind die Rastmittel beim Verschwenken der Gelenkscheiben unsichtbar und verbessert vor Beschädigung und Verschmutzung geschützt.

Vorzugsweise sind die Rasterhebungen und die Rastdurchgangsbohrungen jeweils radial gleich beabstandet zu der Drehachse angeordnet, sodass sie beim Rasten übereinander fluchtend angeordnet sind.

Dabei sind die Glieder jeweils über einen Nietbolzen der Gelenkverbindung aneinandergehalten, wobei die Glieder und die Gelenkscheiben von dem Nietbolzen durchsetzt sind und hierfür entsprechende Durchgangsbohrungen und Ausfräsungen für die Durchführung und Aufnahme des Nietbolzens aufweisen.

Vorzugsweise sind alle Glieder des Gliedermaßstabs jeweils paarweise über die Gelenkverbindung drehgelenkig miteinander verbunden.

Es sind im Rahmen der Erfindung jedoch auch alternative Ausführungsformen umfasst, bei denen nur eine Teilmenge der Glieder, vorzugsweise die gegenüber den Mittegliedern verkürzten Endglieder, des Gliedermaßstabs mit benachbarten Mittegliedern paarweise über die Gelenkverbindung mit den in der Zwischenstellung rastenden Rastmitteln verbunden sind. Die Mitteglieder selbst können dabei jeweils paarweise miteinander über aus dem Stand der Technik bekannte Gelenkverbindungen ohne in der Zwischenstellung rastende Rastmittel verbunden sein.

Nach einer bevorzugten Ausführungsform der Erfindung liegen Bohrungsachsen beziehungsweise Mittelpunkte von zwei der insgesamt vier Rastdurchgangsbohrungen der ersten Gelenkscheibe in einer gemeinsamen ersten Ebene mit der Drehachse, wobei diese erste Ebene rechtwinklig zu der Gliederlängsachse der Glieder orientiert ist. Mit anderen Worten sind die vier Rastdurchgangsbohrungen insofern diametral um die Drehachse herum radial gleich verteilt angeordnet, wobei zwei der Rastdurchgangsbohrungen mittig auf einer parallel zu der Gliederlängsachse der Glieder orientierten und die Drehachse schneidenden ersten Geraden und zwei weitere der Rastdurchgangsbohrungen mittig auf einer zu der ersten Geraden senkrecht orientierten und die Drehachse schneidenden zweiten Geraden angeordnet sind. Hierdurch ergibt sich eine besonders vorteilhafte definierte, stabile rechtwinklige Zwischenstellung bei einem Ausfaltwinkel von φ = 90° beziehungsweise φ = 270° zwischen dem ersten Glied und dem zweiten Glied.

Nach einer Weiterbildung der Erfindung weisen die Rasterhebungen der zweiten Gelenkscheibe die Gestalt einer Kugelkalotte auf. Diese Form hat sich als besonders funktionsstabil und konstruktiv einfach im Aufbau und damit leicht zu fertigen herausgestellt. Die kugelkalottenförmigen beziehungsweise kugelsegmentförmigen Rasterhebungen können beispielsweise jeweils als eine eingeprägte beziehungsweise tiefgezogene Hohlform in die zweite Gelenkscheibe eingebracht werden und ermöglichen formbedingt gleiche Reibeigenschaften für die Gelenkverbindung in beide möglichen Drehrichtungen beim Ausfalten beziehungsweise Verschwenken der Glieder. Entsprechend können die zu den Rasterhebungen komplementären Rastaussparungen der ersten Gelenkscheibe als besonders kostengünstig einzuarbeitende Durchgangsbohrungen ausgeführt werden.

Nach einer bevorzugten Ausführungsform der Erfindung weist das erste Glied wenigstens eine erste Vertiefung auf derart, dass sich zumindest abschnittsweise an die vier Rastdurchgangsbohrungen der ersten Gelenkscheibe jeweils ein Hohlraum anschließt zur abschnittsweisen Aufnahme der Rasterhebungen der zweiten Gelenkscheibe beim Rasten. Beim Rasten in den definierten Stellungen der Glieder zueinander tauchen die Rasterhebungen der zweiten Gelenkscheibe insofern in Rastdurchgangsbohrungen der ersten Gelenkscheibe einerseits sowie in die sich anschließende erste Vertiefung in dem ersten Glied andererseits ein. Die erste Vertiefung ermöglicht es insofern, die erste Gelenkscheibe flach auszubilden, sodass die über die Gelenkverbindung verbundenen Glieder plan oder mit geringem Abstand im Bereich der Gelenkverbindung aneinanderlegbar sind. Dadurch ist insbesondere eine qualitative Bedruckung der Längsschmalseiten des Gliedermaßstabs mit einem Werbeaufdruck im eingefalteten Zustand vereinfacht.

Für die erste Vertiefung in dem ersten Glied sind unter Beibehaltung der erfinderischen Idee grundsätzlich unterschiedliche Gestaltungsformen denkbar.

Vorzugsweise weist die Vertiefung den gleichen radialen Abstand zur Drehachse auf wie die Rastdurchgangsbohrungen beziehungsweise Rasterhebungen.

Gemäß einer vorteilhaften ersten Ausführungsform weist die erste Vertiefung des ersten Glieds eine ringförmige Gestalt auf. Die erste Vertiefung ist dabei bevorzugt mittig unterhalb jeder der vier Rastdurchgangsbohrungen der ersten Gelenkscheibe angeordnet, sodass diese unter jeder der Rastdurchgangsbohrungen einen sich anschließenden Hohlraum bereitstellt, in welchen die Rasterhebungen der zweiten Gelenkscheibe der Gelenkverbindung beim Rasten in den definierten Stellungen zusätzlich eintauchen können. Als geschlossene Ringform kann die erste Vertiefung vorteilhaft in einem einzigen Arbeitsgang in das erste Glied eingearbeitet und vorzugsweise eingefräst werden.

Gemäß einer vorteilhaften alternativen zweiten Ausführungsform weist das erste Glied insgesamt vier diametral angeordnete erste Vertiefungen auf, wobei jede erste Vertiefung koaxial zu einer der Rastdurchgangsbohrungen der ersten Gelenkscheibe angeordnet ist. Bei dieser Ausführungsform ist insofern jeder Rastdurchgangsbohrung der ersten Gelenkscheibe jeweils eine erste Vertiefung in dem ersten Glied zugeordnet. Die ersten Vertiefungen können dabei vorteilhaft jeweils kostengünstig als ein Sackloch in das erste Glied eingearbeitet und insbesondere eingebohrt beziehungsweise eingefräst werden.

Nach einer Weiterbildung der Erfindung weist das zweite Glied wenigstens eine zweite Vertiefung zur Aufnahme der Federzungen der zweiten Gelenkscheibe auf. Die Federzungen stellen eine Federkraft bereit, über die die Rasterhebungen beim Verschwenken der Glieder zueinander auf eine Position außerhalb der bevorzugten Stellungen aus den Rastdurchgangsbohrungen herausgezogen und insofern freigelegt werden. Die wenigstens eine zweite Vertiefung in dem zweiten Glied stellt dabei den für diese Bewegung beziehungsweise den Federweg der Federzungen benötigten Raum bereit.

Es sind grundsätzlich unterschiedliche Gestaltungsformen für die zweite Vertiefung in dem zweiten Glied unter Beibehaltung der erfinderischen Idee denkbar.

Gemäß einer vorteilhaften Ausführungsform weist die zweite Gelenkscheibe insgesamt zwei innenliegend und auf einer gemeinsamen Kreislinie mit den Rasterhebungen diametral in Bezug auf die Drehachse angeordnete Durchgangsbohrungen auf, wobei sich die Durchgangsbohrungen diametral gegenüberliegen. Die Durchgangsbohrungen sind insofern in Bezug auf die Drehachse radial um 90° versetzt zu den Rasterhebungen angeordnet.

Diese zusätzlichen Durchgangsbohrungen in der zweiten Gelenkscheibe bilden keine Rastmittel beziehungsweise werden für die funktionale Ausbildung der Gelenkverbindung nicht benötigt, sondern sind für eine vereinfachte Handhabung bei der Fertigung beziehungsweise Montage vorgesehen. Beispielsweise können die Durchgangsbohrungen von komplementären Greifstäben durchsetzt werden, über die die zweiten Gelenkscheiben während der Fertigung beziehungsweise Montage des Gliedermaßstabs gegriffen und weitergegeben werden können, oder es kann ein Stapel beziehungsweise ein Magazin mit einer Mehrzahl von übereinandergelegten zweiten Gelenkscheiben gebildet werden, wobei die Durchgangsbohrungen durchsetzende Stäbe oder dergleichen eine definierte Ausrichtung der zweiten Gelenkscheiben sicherstellen.

In analoger Weise können die erfindungsgemäß vorhandenen Rastdurchgangsbohrungen der ersten Gelenkscheibe während der Fertigung beziehungsweise Montage des Gliedermaßstabs von Greifstäben oder dergleichen durchsetzt werden.

Nach einer Weiterbildung der Erfindung weist das erste Glied eine kreisförmige erste Ausnehmung zur Aufnahme der ersten Gelenkscheibe auf. Das zweite Glied weist eine kreisförmige zweite Ausnehmung zur Aufnahme der zweiten Gelenkscheibe auf. Da die Gelenkscheiben bevorzugt eine im Wesentlichen kreisförmige Gestalt aufweisen, können in die Glieder entsprechend als konstruktiv einfache korrespondierende, kreisförmige Ausnehmungen eingearbeitet werden. Die Ausnehmungen dienen der Aufnahme der Gelenkscheiben und sorgen insofern dafür, dass die Glieder nahezu abstandsfrei aneinanderlegbar sind.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter. Es zeigen:
- Fig. 1: eine Explosionsansicht einer Gelenkverbindung für einen erfindungsgemäßen Gliedermaßstab in einem ersten Ausführungsbeispiel,
- Fig. 2: eine Explosionsansicht einer ersten Gelenkscheibe und eines ersten Ausführungsbeispiels eines ersten Glieds der Gelenkverbindung nach Fig. 1,
- Fig. 3: eine Explosionsansicht einer ersten Gelenkscheibe und eines zweiten Ausführungsbeispiels eines ersten Glieds der Gelenkverbindung nach Fig. 1,

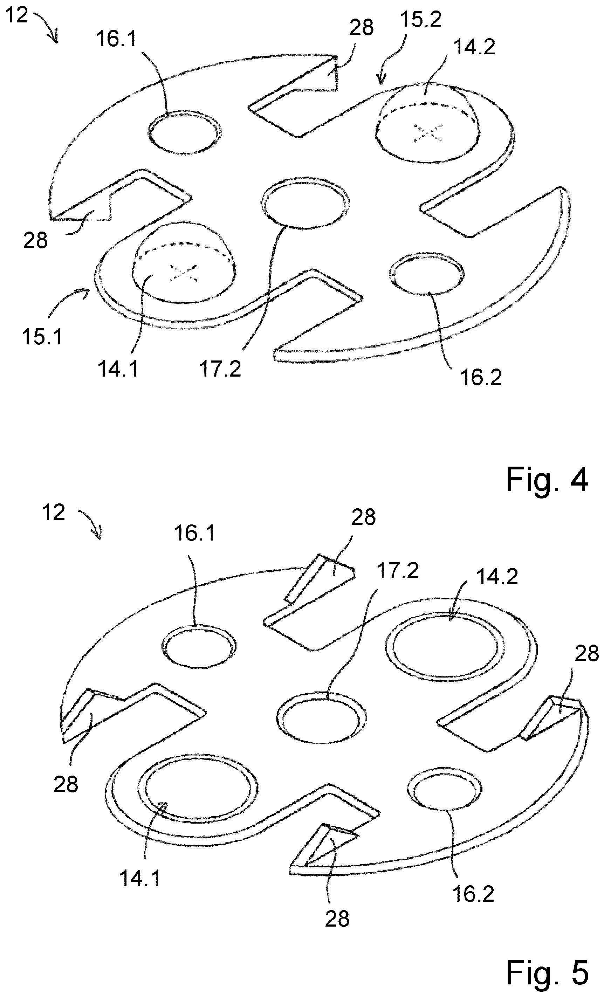

- Fig. 4: eine perspektivische Ansicht von oben einer zweiten Gelenkscheibe der Gelenkverbindung nach Fig. 1,
- Fig. 5: eine perspektivische Ansicht von unten der zweiten Gelenkscheibe der Gelenkverbindung nach Fig. 1,

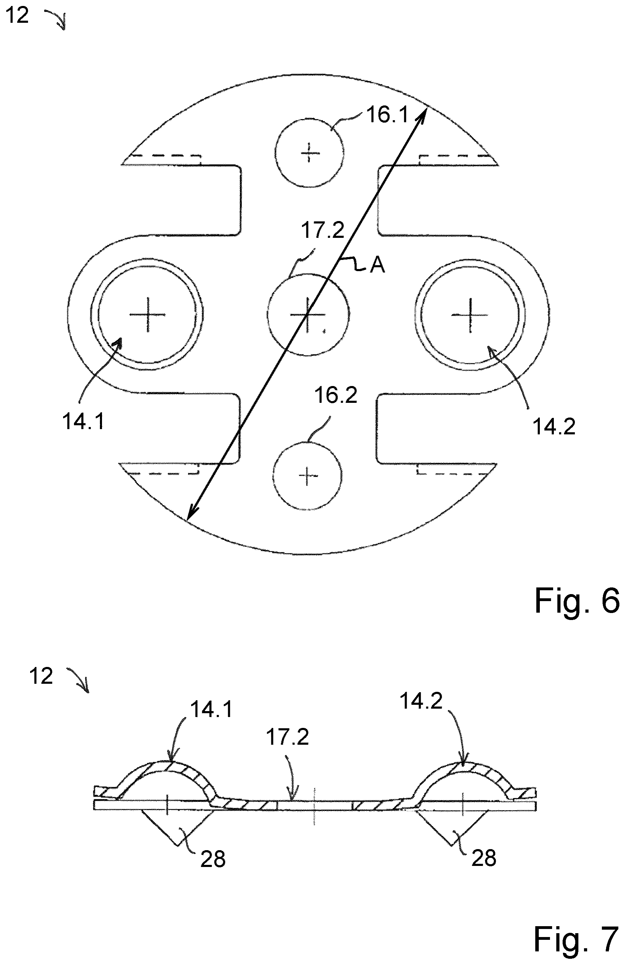

- Fig. 6: eine Draufsicht auf die zweite Gelenkscheibe der Gelenkverbindung nach Fig. 1,
- Fig. 7: eine Schnittansicht der zweiten Gelenkscheibe der Gelenkverbindung nach Fig. 1 mittig geschnitten auf Höhe von Rasterhebungen,

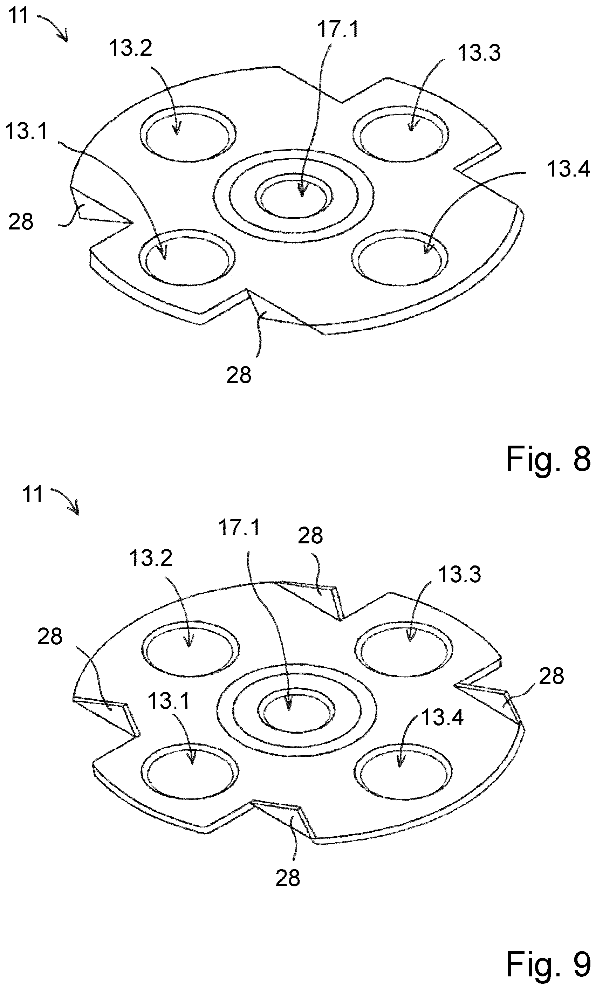

- Fig. 8: eine perspektivische Ansicht von oben der ersten Gelenkscheibe der Gelenkverbindung nach Fig. 1,
- Fig. 9: eine perspektivische Ansicht von unten der ersten Gelenkscheibe der Gelenkverbindung nach Fig. 1,
- Fig. 10: eine Draufsicht auf die erste Gelenkscheibe der Gelenkverbindung nach Fig. 1,
- Fig. 11: eine Schnittansicht der ersten Gelenkscheibe der Gelenkverbindung nach Fig. 1 mittig geschnitten auf Höhe von Rastdurchgangsbohrungen,
- Fig. 12: eine Schnittansicht der zueinander parallelen Glieder der Gelenkverbindung nach Fig. 1 mit den daran festgelegten Gelenkscheiben im unmontierten Zustand,
- Fig. 13: eine Schnittansicht der montierten Gelenkverbindung nach Fig. 1 mit den Gliedern in einer nicht rastenden, undefinierten Schwenkstellung und
- Fig. 14: eine Schnittansicht der montierten Gelenkverbindung nach Fig. 1 mit den Gliedern in einer rastenden, definierten eingefalteten Schwenkstellung.

Gegenstand der Figuren ist eine Gelenkverbindung 10 eines erfindungsgemäßen Gliedermaßstabs und deren Elemente beziehungsweise Komponenten.

Der erfindungsgemäße Gliedermaßstab weist zunächst einen Aufbau mit einer Mehrzahl von jeweils paarweise über eine Gelenkverbindung 10 mit einem Nietbolzen um eine Drehachse D drehgelenkig miteinander verbundenen, in einer Gliederlängsrichtung L längserstreckten Gliedern 1, 2 auf. Der Nietbolzen ist aus Vereinfachungsgründen nicht figürlich dargestellt, es kann jedoch ein herkömmlicher bekannter Nietbolzen für die Gelenkverbindung 10 verwendet werden.

Beispielsweise weist der erfindungsgemäße Gliedermaßstab in einem besonders bevorzugten Ausführungsbeispiel insgesamt zehn Glieder 1, 2 auf, von denen acht innenliegende Glieder 1, 2 als gleichlange Mittelglieder und die beiden die äußeren Glieder 1, 2 als gegenüber den Mittelgliedern verkürzte Endglieder ausgeführt sind, wobei die insgesamt zehn Glieder 1, 2 im vollständig ausgefalteten Zustand in der Gliederlängsrichtung L zueinander fluchtend angeordnet sind und dabei eine Messskala mit einer bevorzugten Länge von 200 cm aufspannen.

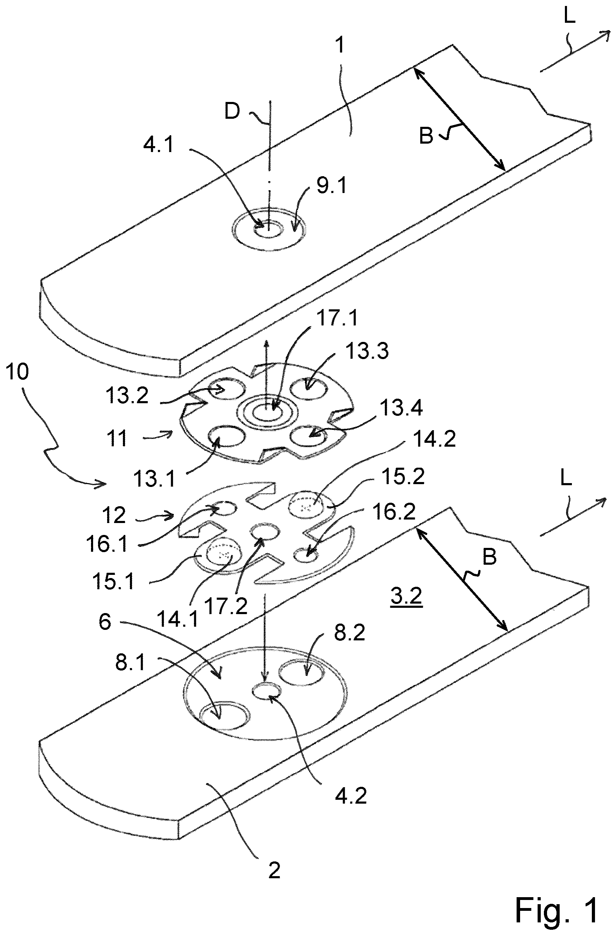

Der erfindungsgemäße Gliedermaßstab zeichnet sich durch die in Fig. 1 in einer Explosionsansicht dargestellten Gelenkverbindung 10 aus. Die Gelenkverbindung 10 ermöglicht ein Verschwenken der Glieder 1, 2 zueinander mit einem Verrasten von Rastmitteln der Gelenkverbindung 10 in definierten bevorzugten Schwenkstellungen.

Die Gelenkverbindung 10 weist als eine erste Besonderheit im Wesentlichen flache, kreisförmige Gelenkscheiben **11,** 12 als Beschlagelemente auf. Die Gelenkscheiben **11,** 12 sind zwischen einander parallel gegenüberliegenden Breitseitenflächen 3.1, 3.2 der Glieder 1, 2 angeordnet und in dem figürlichen Ausführungsbeispiel in korrespondierend geformte, kreisförmige Ausnehmungen 5, 6 in den Breitseitenflächen 3.1, 3.2 der Glieder 1, 2 aufgenommen. Eine erste Gelenkscheibe **11** ist mit dem ersten Glied 1 verbunden, eine zweite Gelenkscheibe 12 ist mit dem zweiten Glied 2 verbunden. Die kreisförmigen Ausnehmungen 5, 6 sind mittig in Bezug auf eine Gliederbreite B der Glieder 1, 2 angeordnet.

Für die Durchführung des Nietbolzens weisen die Glieder 1, 2 jeweils eine Dorndurchgangsbohrung 4.1, 4.2 auf, welche konzentrisch zu den Ausnehmungen 5, 6 angeordnet sind. An den Gelenkscheiben **11,** 12 gegenüberliegenden äußeren Breitseitenflächen weisen die Glieder 1, 2 jeweils eine Nietkopfausnehmung 9.1, 9.2 auf, die zur Aufnahme eines Nietkopfes des Nietbolzens dienen.

Die scheibenförmige erste Gelenkscheibe **11** weist mittig und auf Höhe der Drehachse D eine durchgehende Nietbohrung 17.1 zur Durchführung des Nietbolzens auf. Als Rastmittel weist die erste Gelenkscheibe 11 insgesamt vier kreisförmige Rastdurchgangsbohrungen 13.1, 13.2, 13.3, 13.4 auf, welche diametral beziehungsweise radial gleich verteilt um die Drehachse D beziehungsweise Nietbohrung 17.1 angeordnet sind. Weiter sieht die erste Gelenkscheibe 11 insgesamt vier zu einer Unterseite hin rechtwinklig abragende, randseitige Zacken 28 vor, welche im montierten Zustand in das erste Glied 1 eingreifen und die erste Gelenkscheibe 11 daran festhalten.

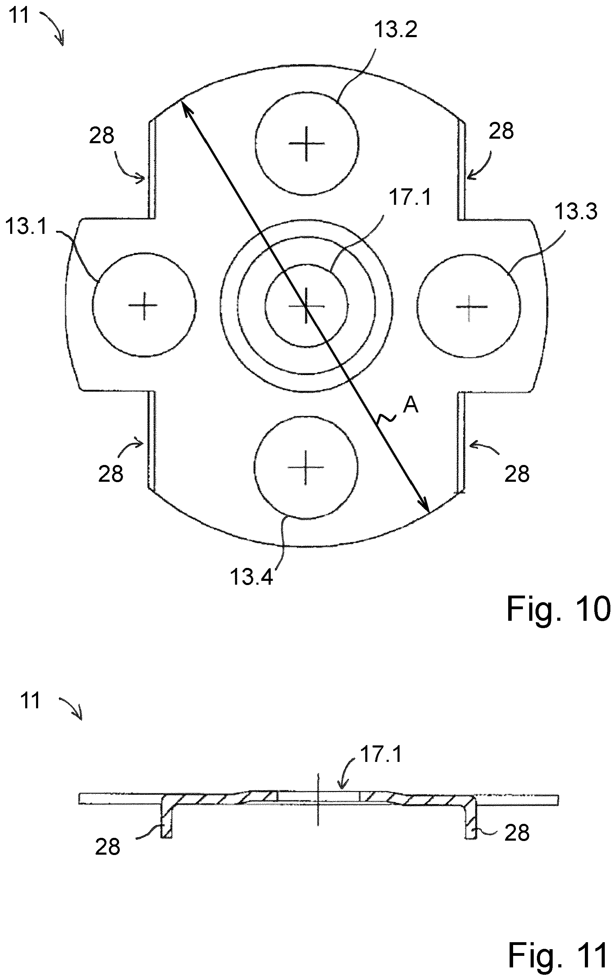

Die ebenfalls scheibenförmige zweite Gelenkscheibe 12 weist zur Durchführung des Nietbolzens eine mittig und auf Höhe der Drehachse D angeordnete durchgehende Nietbohrung 17.2 auf. Die Nietbohrung 17.2 ist, wie die Fig. 11 zeigt, in einem zu einer den Zacken gegenüberliegenden Oberseite hin leicht erhabenen, kreisförmigen Abschnitt der zweiten Gelenkscheibe 12 angeordnet. Im montierten Zustand und beim Verschwenken der Glieder 1, 1 bildet dieser erhabene Abschnitt der zweiten Gelenkscheibe 12 den Kontaktbereich mit der ersten Gelenkscheibe 11. Als Rastmittel weist die zweite Gelenkscheibe 12 zwei mittig auf einander gegenüberliegenden, elastisch ausgebildeten Federzungen 15.1, 15.2 angeordnete Rasterhebungen 14.1, 14.2 auf. Die Federzungen 15.1, 15.2 sind durch jeweils zwei rechteckige Randausnehmungen in der zweiten Gelenkscheibe 12 gebildet. Im Bereich dieser Randausnehmungen weist die zweite Gelenkscheibe 12 insgesamt vier zu einer Unterseite rechtwinklig abragende Zacken 28 zum Halten an dem zweiten Glied 2 auf.

Die Rasterhebungen 14.1, 14.2 sind einander diametral gegenüberliegend um die Drehachse D beziehungsweise Nietbohrung 17.2 auf der zweiten Gelenkscheibe 12 angeordnet und sie sind als kugelsegment- beziehungsweise kalottenförmige Hohlform in die zweite Gelenkscheibe 12 eingeformt. Damit sind die Rasterhebungen 14.1, 14.2 formkorrespondierend zu den vier Rastdurchgangsbohrungen 13.1, 13.2, 13.3, 13.4 der ersten Gelenkscheibe 11 ausgeführt.

Die Rasterhebungen 14.1, 14.2 sowie die Rastdurchgangsbohrungen 13.1, 13.2, 13.3, 13.4 sind auf den Gelenkscheiben 11, 12 mit jeweils gleichem Mittenabstand zu der Drehachse D beziehungsweise den Nietbohrungen 17.1, 17.2 platziert, sodass beim Verschwenken der Glieder 1, 2 die Rasterhebungen 14.1, 14.2 in die Rastdurchgangsbohrungen 13.1, 13.2, 13.3, 13.4 eintauchen, respektive darin rasten können.

Zusätzlich weist die zweite Gelenkscheibe 12 zwei in Bezug auf die Drehachse D einander paarweise diametral gegenüberliegende beziehungsweise radial zwischen den Rasterhebungen 14.1, 14.2 gleich verteilt angeordnete Durchgangsbohrungen 16.1, 16.2 auf. Die Durchgangsbohrungen 16.1, 16.2 dienen einer vereinfachten Handhabung bei der Fertigung des erfindungsgemäßen Gliedermaßstabs, wofür sie von Greifstäben durchgreifbar sind.

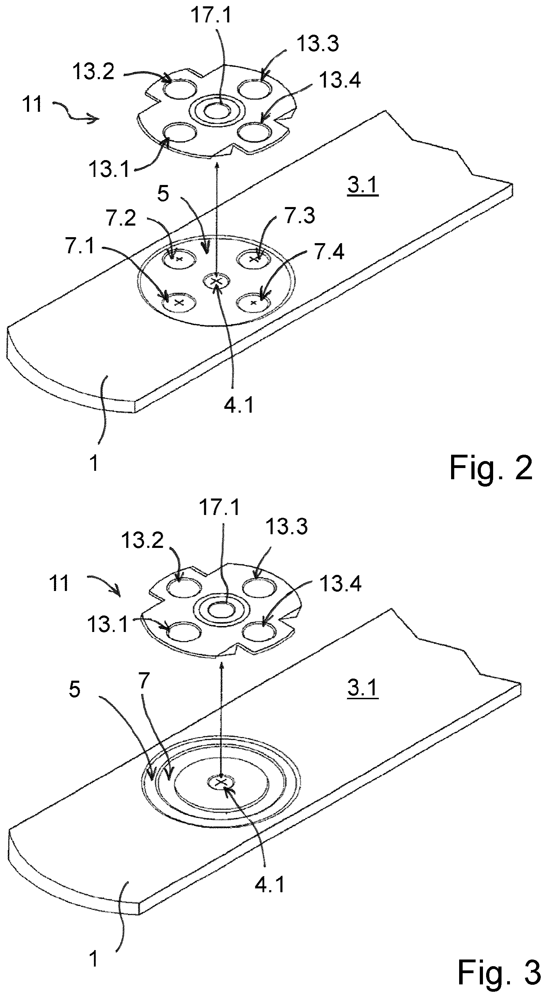

Die Fig. 2 und Fig. 3 geben zwei verschiedene Ausführungsbeispiele für das erste Glied 1 des erfindungsgemäßen Gliedermaßstabs an.

In dem ersten Ausführungsbeispiel gemäß Fig. 2 weist das erste Glied 1 insgesamt vier erste Vertiefungen 7.1, 7.2, 7.3, 7.4 auf, die als kreisförmige Senkbohrungen diametral beziehungsweise radial gleich verteilt um die Dorndurchgangsbohrung 4.1 beziehungsweise Drehachse D und innerhalb der kreisförmigen Ausnehmung 5 angeordnet sind.

In dem zweiten Ausführungsbeispiel gemäß Fig. 3 weist das erste Glied 1 eine einzige ringförmige erste Vertiefung 7 auf, die koaxial zu der Drehachse D und koaxial zu und innerhalb der kreisförmigen Ausnehmung 6 angeordnet ist.

Die ersten Vertiefungen 7, 7.1, 7.2, 7.3, 7.4 gehen jeweils von der ersten Ausnehmung 5 aus tiefer ins Innere des ersten Gliedes 1 hinein und haben die Funktion, einen Hohlraum zur abschnittsweisen Aufnahme der Rasterhebungen 14.1, 14.2 beim Rasten in den bevorzugten Schwenkstellungen bereitzustellen. Beim Rasten sind insofern die beiden Rasterhebungen 14.1, 14.2 jeweils in zwei der vier Rastdurchgangsbohrungen 13.1, 13.2, 13.3, 13.4 eingetaucht sowie in den sich daran anschließenden Hohlraum, der im Ausführungsbeispiel nach Fig. 2 von der ringförmigen ersten Vertiefung 7 beziehungsweise im Ausführungsbeispiel nach Fig. 3 von zwei der vier ersten Vertiefungen 7.1, 7.2, 7.3, 7.4 bereitgestellt wird.

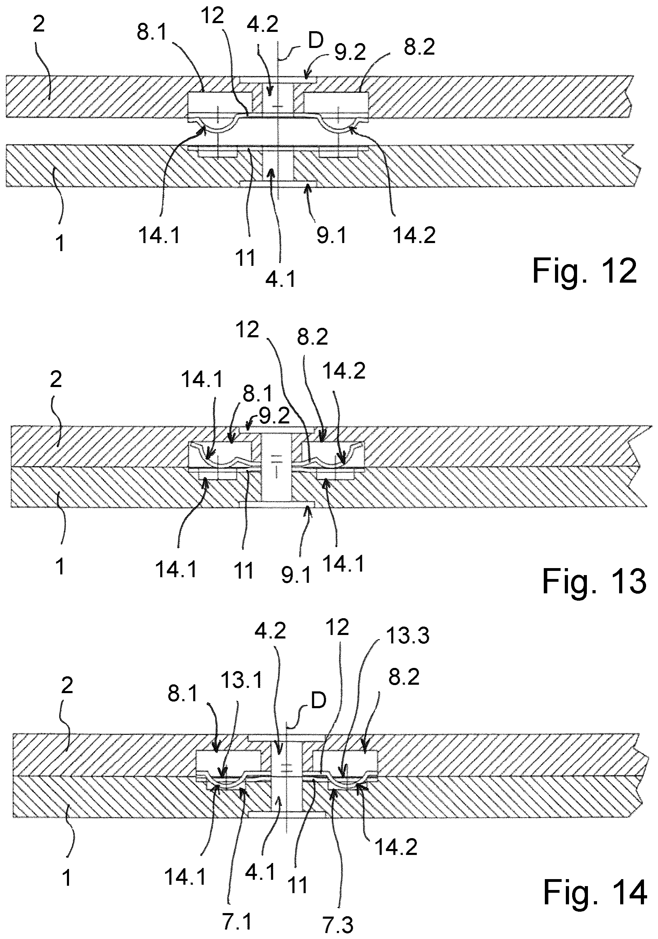

Die Fig. 12 zeigt eine Schnittansicht der Gelenkverbindung 10 im unmontierten Zustand vor der Durchführung des Nietbolzens, wobei die Gelenkscheiben 11, 12 hier bereits an den Gliedern 1, 2 festgelegt sind und die Glieder 1, 2 einander zugewandt aber noch nicht aneinandergelegt und über den Nietbolzen miteinander verbunden sind. Die Federzungen 15.1, 15.2 der zweiten Gelenkscheibe 12 sind hierbei in einer Ruhestellung gehalten, in welcher die Federzungen 15.1, 15.2 leicht, vorzugsweise zirka 0,1 mm, gegenüber der Oberseite der zweiten Gelenkscheibe 12 beziehungsweise gegenüber der zweiten Breitseitenfläche 3.2 des zweiten Glieds 2 hervorstehen. Der Rest der zweiten Gelenkscheibe 12 ist in etwa bündig zu der zweiten Breitseitenfläche 3.2 des zweiten Glieds 2 gehalten, dadurch, dass die zweite Gelenkscheibe 12 in die kreisförmige zweite Ausnehmung 6 aufgenommen ist. Die erste Gelenkscheibe 11 ist in der ersten Ausnehmung 5 des ersten Glieds 1 aufgenommen und bündig zu der ersten Breitseitenfläche 3.1 gehalten.

Fig. 13 zeigt die Gelenkverbindung 10 im montierten Zustand in einer Schnittansicht, wobei die Rasterhebungen 14.1, 14.2 außer Eingriff beziehungsweise nicht rastend mit den Rastdurchgangsbohrungen 13.1, 13.2, 13.3, 13.4 angeordnet sind. Demzufolge sind hier die Glieder 1, 2 in einer Position außerhalb der bevorzugten Schwenkstellungen gehalten. Die Federzungen 15.1, 15.2 der zweiten Gelenkscheibe 12 sind hierbei gegen ihre eigene Federkraft von der ersten Gelenkscheibe 11 jeweils in zweite Vertiefungen 8.1, 8.2 des zweiten Glieds 2 hineingedrückt, wobei die Rasterhebungen 14.1, 14.2 an der ersten Gelenkscheibe 11 anliegen.

In Fig. 14 sind die Glieder 1, 2 parallel zueinander gehalten und in eine definierte eingefaltete Schwenkstellung verbracht, in der das erste Glied 1 und das zweite Glied 2 vollständig übereinanderliegend gehalten sind und einen Ausfaltwinkel von φ = 0° aufspannen. Die Rasterhebungen 14.1, 14.2 sind hierbei fluchtend zu zwei einander diametral gegenüberliegenden Rastdurchgangsbohrungen 13.1, 13.3 angeordnet und über die von den Federzungen 15.1, 15.2 aufgebrachte Federkraft zum Rasten verbracht. Eine erste Rasterhebung 14.1 rastet hierbei mit einer ersten Rastdurchgangsbohrung 13.1 beziehungsweise taucht in diese ein, eine zweite Rasterhebung 14.2 rastet mit einer dritten Rastdurchgangsbohrung 13.3 beziehungsweise taucht in diese ein. Die Rasterhebungen 14.1, 14.2 ragen dabei abschnittsweise durch die Rastdurchgangsbohrungen 13.1, 13.3 hindurch in die sich anschließenden ersten Vertiefungen 7.1, 7.3 des ersten Glieds 1 ein.

Die Gelenkscheibe 10 ermöglicht weitere figürlich nicht dargestellte, bevorzugte Schwenkstellungen, in denen die Rastmittel 14.1, 14.2, 13.1, 13.2, 13.3, 13.4 in analoger Weise miteinander verrasten. Eine ausgefaltete Schwenkstellung, in der das erste Glied 1 und das zweite Glied 2 zueinander parallel fluchtend und lediglich teilweise übereinanderliegend gehalten sind und einen Ausfaltwinkel von φ = 180° aufspannen. Ferner als ein erfindungswesentliches Merkmal ist eine zwischen der eingefalteten Schwenkstellung und der ausgefalteten Schwenkstellung liegende definierte Zwischenschwenkstellung, in welcher die Glieder 1, 2 rechtwinklig zueinander gehalten sind und einen Ausfaltwinkel von φ = 90° beziehungsweise φ = 270° aufspannen.

Die Erfindung ist nicht auf die figürlich dargestellten Ausführungsbeispiele beschränkt.

Gemäß einem bevorzugten Ausführungsbeispiel der Gelenkverbindung weisen die erste Gelenkscheibe 11 und die zweite Gelenkscheibe 12 einen Außendurchmesser A von jeweils 14 mm ± 0,05 mm und eine Wandstärke im Bereich von 0,3 mm bis 0,4 mm ± 0,05 mm auf. Die Rastdurchgangsbohrungen 13.1, 13.2, 13.3, 13.4 der ersten Gelenkscheibe 11 weisen bevorzugt einen Bohrungsdurchmesser von 3 mm ± 0,05 mm und einen radialen Abstand zur Drehachse D von 4,7 mm ± 0,05 mm auf. Die Durchgangsbohrungen 16.1, 16.2 der zweiten Gelenkscheibe 12 weisen bevorzugt einen Bohrungsdurchmesser von 2 mm ± 0,05 mm und einen radialen Abstand zur Drehachse D von 4,7 mm ± 0,05 mm auf. Die Federzungen 15.1, 15.2 der zweiten Gelenkscheibe 12 weisen bevorzugt eine Breite von 4,6 mm ± 0,05 mm auf, die die Federzungen 15.1, 15.2 ausformenden, seitlich umschließenden Randausnehmungen weisen bevorzugt eine Breite von 2 mm ± 0,05 mm auf. Die Rasterhebungen 14.1, 14.2 sind bevorzugt kugelkalottenförmig und weisen bevorzugt einen Krümmungsradius von 1,5 mm ± 0,05 mm, einen radialen Abstand zur Drehachse D von 4,7 mm ± 0,05 mm und eine Tiefe von 1 mm ± 0,05 mm auf.

Vorzugsweise sind die Gelenkscheiben 11, 12 aus Metall, insbesondere aus Federstahl hergestellt und bevorzugt als Stanzblechbauteile gefertigt.

Die Glieder 1, 2 des Gliedermaßstabs sind bevorzugt aus Holz hergestellt.

Gleiche Bauteile und Bauteilfunktionen sind durch gleiche Bezugszeichen gekennzeichnet.

### Bezugszeichenliste

- 1: erstes Glied
- 2: zweites Glied
- 3.1: Breitseitenfläche
- 3.2: Breitseitenfläche
- 4.1: Dorndurchgangsbohrung
- 4.2: Dorndurchgangsbohrung
- 5: erste Ausnehmung
- 6: zweite Ausnehmung
- 7: erste Vertiefung
- 7.1: erste Vertiefung
- 7.2: erste Vertiefung
- 7.3: erste Vertiefung
- 7.4: erste Vertiefung
- 8.1: zweite Vertiefung
- 8.2: zweite Vertiefung
- 9.1: Nietkopfausnehmung
- 9.2: Nietkopfausnehmung
- 10: Gelenkverbindung
- 11: erste Gelenkscheibe
- 12: zweite Gelenkscheibe
- 13.1: Rastdurchgangsbohrung
- 13.2: Rastdurchgangsbohrung
- 13.3: Rastdurchgangsbohrung
- 13.4: Rastdurchgangsbohrung
- 14.1: Rasterhebung
- 14.2: Rasterhebung
- 15.1: Federzunge
- 15.2: Federzunge
- 16.1: Durchgangsbohrung
- 16.2: Durchgangsbohrung
- 17.1: Nietbohrung
- 17.2: Nietbohrung
- 28: Zacken
- A: Außendurchmesser
- B: Gliederbreite
- D: Drehachse
- L: Gliederlängsrichtung

## Patentansprüche

1. Gliedermaßstab mit einer Mehrzahl an in einer Gliederlängsrichtung (L) langgestreckten flachen Gliedern (1, 2), die paarweise über eine Gelenkverbindung (10) um eine Drehachse (D) drehgelenkig verbunden sind, wobei
- die Gelenkverbindung (10) eine an einem ersten Glied (1) festgelegte erste Gelenkscheibe (11) und eine an einem zweiten Glied (2) festgelegte zweite Gelenkscheibe (12) aufweist,
- die Gelenkscheiben (11, 12) zueinander komplementäre Rastmittel aufweisen, die in einer eingefalteten Stellung und in einer ausgefalteten Stellung der Glieder (1, 2) einerseits und in einer beim Verschwenken des ersten Glieds (1) relativ zu dem zweiten Glied (2) dazwischenliegenden abgewinkelten Zwischenstellung andererseits ineinander rasten,
- die Gelenkscheiben (11, 12) einen Außendurchmesser (A) aufweisen, der geringer ist als eine Gliederbreite (B) der Glieder (1, 2),
- die erste Gelenkscheibe (11) insgesamt vier diametral in Bezug auf die Drehachse (D) angeordnete Rastmittel aufweist,
- die zweite Gelenkscheibe (12) diametral in Bezug auf die Drehachse (D) angeordnete Rastmittel aufweist und
- die Rasterhebungen (14.1, 14.2) jeweils auf einer elastisch biegsamen Federzunge (15.1, 15.2) der zweiten Gelenkscheibe (12) angeordnet sind
**dadurch gekennzeichnet, dass** die erste Gelenkscheibe (11) insgesamt vier innenliegende Rastdurchgangsbohrungen (13.1, 13.2, 13.3, 13.4) als Rastmittel aufweist und die zweite Gelenkscheibe (12) insgesamt zwei innenliegende Rasterhebungen (14.1, 14.2) als Rastmittel aufweist.

2. Gliedermaßstab nach Anspruch 1, **dadurch gekennzeichnet, dass** Bohrungsachsen von zwei der insgesamt vier Rastdurchgangsbohrungen (13.1, 13.2, 13.3, 13.4) der ersten Gelenkscheibe (11) in einer gemeinsamen ersten Ebene mit der Drehachse (D) liegen, wobei die erste Ebene rechtwinklig zu der Gliederlängsachse (L) der Glieder (1, 2) orientiert ist.

3. Gliedermaßstab nach Anspruch 1 oder 2, **dadurch gekennzeichnet, dass** die Rasterhebungen (14.1, 14.2) der zweiten Gelenkscheibe (12) die Gestalt einer Kugelkalotte aufweisen.

4. Gliedermaßstab nach einem der Ansprüche 1 bis 3, **dadurch gekennzeichnet, dass** das erste Glied (1) wenigstens eine erste Vertiefung (7, 7.1, 7.2, 7.3, 7.4) aufweist derart, dass sich zumindest abschnittsweise an die vier Rastdurchgangsbohrungen (13.1, 13.2, 13.3, 13.4) der ersten Gelenkscheibe (11) jeweils ein Hohlraum anschließt zur abschnittsweisen Aufnahme der Rasterhebungen (14.1, 14.2) der zweiten Gelenkscheibe (12) beim Rasten.

5. Gliedermaßstab nach Anspruch 4, **dadurch gekennzeichnet, dass** die erste Vertiefung (7, 7.1, 7.2, 7.3, 7.4) des ersten Glieds (1) eine ringförmige Gestalt aufweist.

6. Gliedermaßstab nach Anspruch 4, **dadurch gekennzeichnet, dass** das erste Glied (1) insgesamt vier diametral angeordnete erste Vertiefungen (7.1, 7.2, 7.3, 7.4) aufweist, wobei jede erste Vertiefung (7.1, 7.2, 7.3, 7.4) koaxial zu einer der Rastdurchgangsbohrungen (13.1, 13.2, 13.3, 13.4) der ersten Gelenkscheibe (11) angeordnet ist.

7. Gliedermaßstab nach einem der Ansprüche 1 bis 6, **dadurch gekennzeichnet, dass** das zweite Glied (2) wenigstens eine zweite Vertiefung (8.1, 8.2) zur Aufnahme der Federzungen (15.1, 15.2) der zweiten Gelenkscheibe (12) aufweist.

8. Gliedermaßstab nach Anspruch 7, **dadurch gekennzeichnet, dass** das zweite Glied (2) insgesamt zwei diametral angeordnete zweite Vertiefungen (8.1, 8.2) aufweist, wobei jede zweite Vertiefung (8.1, 8.2) koaxial zu einer der Rasterhebungen (14.1, 14.2) der zweiten Gelenkscheibe (12) angeordnet ist.

9. Gliedermaßstab nach einem der Ansprüche 1 bis 8, **dadurch gekennzeichnet, dass** die zweite Gelenkscheibe (12) insgesamt zwei innenliegend und auf einer gemeinsamen Kreislinie mit den Rasterhebungen (14.1, 14.2) diametral angeordnete Durchgangsbohrungen (16.1, 16.2) aufweist, wobei sich die Durchgangsbohrungen (16.1, 16.2) diametral gegenüberliegen.

10. Gliedermaßstab nach einem der Ansprüche 1 bis 9, **dadurch gekennzeichnet, dass** das erste Glied (1) eine kreisförmige erste Ausnehmung (5) zur Aufnahme der ersten Gelenkscheibe (11) aufweist und das zweite Glied (2) eine kreisförmige zweite Ausnehmung (6) zur Aufnahme der zweiten Gelenkscheibe (12) aufweist.
